# EUROPEAN PATENT SPECIFICATION

(11) **EP 2 757 891 B1**
(45) Date of publication and mention of the grant of the patent: **14.06.2017**
(21) Application number: 12750395.1
(22) Date of filing: 27.08.2012
(51) Int. Cl.: A23L 29/212

(54) **PROCESS TO MANUFACTURE EDIBLE LOW-FAT WATER-IN-OIL EMULSIONS**
VERFAHREN ZUR HERSTELLUNG VON ESSBAREN WASSER-IN-ÖL-EMULSIONEN MIT GERINGEM FETTANTEIL
PROCÉDÉ DE FABRICATION D'ÉMULSIONS EAU DANS L'HUILE COMESTIBLES À FAIBLE TENEUR EN GRAISSES

(30) Priority: 19.09.2011 EP 11181744
(43) Date of publication of application: 30.07.2014
(73) Proprietor: Unilever N.V., 3013 AL Rotterdam (NL); Unilever BCS Europe B.V., 3013 AL Rotterdam (NL); Unilever PLC, London EC4Y 0DY (GB); Unilever BCS Limited, London, EC4Y 0DY (GB)
(72) Inventor: DOL, Georg, Christian, NL-3133 AT Vlaardingen (NL); LEENHOUTS, Abraham, NL-3133 AT Vlaardingen (NL); POTMAN, Ronald, Peter, NL-3133 AT Vlaardingen (NL); TIO, Farley, Ferdinand, NL-3133 AT Vlaardingen (NL)
(74) Representative: Wurfbain, Gilles L.
(86) International application number: PCT/EP2012/066566
(87) International publication number: WO 2013/041326

(56) References cited:
- EP-A1- 0 237 120
- WO-A1-2010/069746
- WO-A1-2010/069751
- WO-A1-2010/069752
- WO-A1-2010/069753
- US-A- 5 194 285

## Description

### Field of the invention

The invention relates to a process to manufacture edible low-fat water-in-oil emulsions and edible products derived thereof.

### Background of the invention

Fat continuous food products are well known in the art and include for example shortenings comprising a fat phase and water-in-oil spreads like margarine comprising a fat phase and an aqueous phase.

The fat phase of margarine and similar edible fat continuous spreads is often a mixture of liquid oil (i.e. fat that is liquid at ambient temperature) and fat which is solid at ambient temperatures. The solid fat, also called structuring fat or hardstock fat, serves to structure the fat phase (being the case in for example a shortening as well as in a water in oil emulsion) and helps to stabilize the aqueous phase, if present, by forming a fat crystal network. For a margarine or spread, ideally the structuring fat has such properties that it melts or dissolves at mouth temperature. Otherwise the product may have a heavy and/or waxy mouthfeel.

Important aspects of fat continuous spreads like for example margarines and low-fat spreads, the low-fat spreads usually comprising up to 45 wt. % fat on total weight of the composition, are for example hardness, spreadability and ability to withstand temperature cycling. Temperature cycling means that the product is subjected to low and high temperatures (e.g. when the consumer takes the product out of the refrigerator and leaves it for some time at the table prior to use). This may have a negative influence on the structure of the spread (like for example the occurrence of free water or oil-exudation).

Generally edible fat continuous food products like shortenings and margarines and similar edible fat continuous spreads are prepared according to prior art processes that encompass the following steps:
1. Mixing of the liquid oil, the structuring fat and if present the aqueous phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

A disadvantage of these processes is that the complete composition (including the liquid oil, structuring fat and if present the aqueous phase) is subjected to a heating step and a cooling step. This requires a lot of energy. For a spread comprising for example 6 wt. % structuring fat the whole composition (100 wt%) has to be heated and cooled.

Another disadvantage of the known processes is that the choice of fats that can practically be used as structuring agent is rather limited. If the melting point of the structuring agent is too high the melting properties in the mouth are unsatisfactory. If on the other hand, the melting point is too low, the emulsion stability will be negatively affected. Moreover the amount of saturated fatty acids (SAFA) in the structuring agent is usually relatively high. Also trans fatty acid may be present. Some experts have called for reductions in these fatty acids to improve cardiovascular health.

Some consumers prefer spreads that have a low energy density (for example products that are low in total fat) and/or are low in SAFA but still have a good nutritional profile (by providing for example essential fatty acids like omega-3 and omega-6).

A further disadvantage of the known processes is that the product may deteriorate due to the changes in temperature caused by the heating and cooling step.

Alternative processes have been described wherein the structuring fat is added as fat powder (i.e. crystallized fat) thereby eliminating the need to heat the whole composition to above the melting temperature of the structuring fat.

EP 1865786 A discloses a process for the preparation of a spreadable edible dispersion wherein a mixture of liquid oil and solid structuring agent particles is subjected to stirring and an aqueous phase is gradually added to the mixture until a dispersion is obtained. The solid structuring agent particles have a microporous structure of submicron size particles and can be prepared using a micronisation process. A high fat spreadable margarine (70 wt. % fat) and low fat spreads (33 and 40 wt. % fat) are disclosed. The aqueous phase only contains potassium sorbate and sodium chloride.

The quality of water-in-oil emulsions comprising at most 45 wt. % fat and less than 25 wt. % SAFA, based on the total fat phase, which are prepared in a process comprising fat powder may be reduced when such emulsions have an empty aqueous phase or an aqueous phase which contains only salt. An example of such a reduced quality is reduced taste perception. Another example is a reduced ability of the emulsion to stick to a knife during spreading. It is known that the quality of such emulsions can be improved by addition of a gelling system to the aqueous phase.

WO2010069751 discloses a low-fat water-in-oil spreads comprising a gelling system based on a combination of starch (Merigel) and gelatine. Merigel is a waxy corn starch which is modified using cross-linking by acetic acid anhydride and substituted by adipic acid anhydride. Such modified starched are also known as acetylated di-starch adipate.

WO 2010/069746 discloses a process for the manufacture of water-in-oil emulsions, with predictable quality and/or with improved properties. The disclosed water-phases comprise a mixture of Merigel and gelatin; or modified tapioca starch (Purity SUV) as gelling system. The gelling systems are prepared in a standard way.

WO 2010/069753 discloses a process for the manufacture of water-in-oil emulsions, which require less energy to make and/or which have an improved structure and/or improved properties. The disclosed water-phases comprise either a mixture of Merigel with gelatin or only Merigel as gelling system. The water-phases comprising said gelling systems are prepared by subjection to 65-70 degrees Celsius and low shear.

WO 2010/069752 discloses a process for the manufacture of water-in-oil emulsions, which require less energy to make and/or which have an improved structure and/or which are of predictable quality. Water-phases comprising a variety of gelling / thickening systems are disclosed, wherein the gelling / thickening systems are prepared in a standard way.

We have found that the addition of a gelling system to the aqueous phase may result in low-fat water-in-oil emulsions of poor stability.

It is an object of the present invention to provide a process to manufacture low-fat water-in-oil emulsions with at most 45 wt. % of a fat phase and an aqueous phase comprising a gelling system, wherein the emulsions are of improved quality.

It is a further object of the present invention to provide a process to manufacture low-fat water-in-oil emulsion with at most 45 wt. % of a fat phase and an aqueous phase comprising a gelling system, wherein the process requires less energy.

It is a further object of the present invention to provide low-fat edible water-in-oil emulsions comprising at most 45 wt. % of a fat phase, at most 25 wt. % SAFA, based on the total weight of the fat phase, and an aqueous phase comprising a gelling system of good quality and stability.

### Summary of the invention

It was found that one or more of the objectives mentioned above is attained by a process for the manufacture of an edible low-fat water-in-oil emulsion comprising an aqueous phase and at most 45 wt. % of a fat phase, wherein said fat phase comprises liquid oil and structuring fat, comprising the steps of
a. providing an aqueous phase comprising a gelling system;
b. providing fat powder comprising structuring fat;
c. forming the edible low-fat water-in-oil emulsion by mixing said aqueous phase, said fat powder and liquid oil;
wherein the aqueous phase comprising a gelling system at step c has a viscosity of at most 100 mPas at 5 degrees Celsius, and wherein the liquid oil may be mixed at any of steps a, b or c, or when mixed in parts in any combination at steps a, b and c

### Detailed description of the invention

Weight percentage (wt. %) is based on the total weight of the composition unless otherwise stated. The terms 'fat' and 'oil' are used interchangeably. Where applicable the prefix 'liquid' or 'solid' is added to indicate if the fat or oil is liquid or solid at ambient temperature as understood by the person skilled in the art. Ambient temperature is a temperature of about 20 degrees Celsius. The term 'structuring fat' refers to a fat that is solid at ambient temperature. The terms 'viscosity enhancing agent' and 'gelling agent' are used interchangeably.

The present invention aims to improve the stability of low-fat water-in-oil emulsions comprising a gelling system. The low-fat water-in-oil emulsion according to the invention contains at most 45 wt. % of a fat phase. Preferably the low-fat water-in-oil emulsion according to the invention has at most 35 wt. %, more preferably at most 32 wt. % and most preferably at most 30 wt. % of a fat phase. The water-in-oil emulsion according to the invention has at least 10 wt. %, preferably at least 15 wt. %, more preferably at least 20 wt. % and most preferably at least 25 wt. % of a fat phase.

The amount of saturated fatty acids (SAFA) in the structuring agent is usually relatively high in low-fat water-in-oil emulsions. However, some experts have called for reductions in saturated fatty acids to improve cardiovascular health. Preferably, products and processes according to the invention employ at most 25 wt. % SAFA, more preferably at most 22 wt. % SAFA and most preferably at most 20 wt. % SAFA, based on the total fat phase.

### Gelling system

A gelling system according to the invention comprises at least one gelling agent. A gelling agent according to the invention is capable of increasing the viscosity of the aqueous phase. A gelling agent typically forms a three-dimensional network of polymer chains in the aqueous phase and is capable of ensnaring liquid through surface tension effects. The polymer network of some gelling agents, such as those based on starch, may form colloidal structures.

Mixing of fat powder, liquid oil and an aqueous phase having a viscosity above 100 mPas at 5 degrees Celsius may not result in the formation of an edible low-fat water-in-oil emulsion of good stability. Therefore, in the process according to the invention the aqueous phase comprising the gelling system has a viscosity of at most 100 mPas at step 'c'. The viscosity of an aqueous phase comprising a gelling system is reduced by subjecting the aqueous phase to high shear at a temperature below the set-point of the gelling system.

The set-point is generally provided by the commercial supplier and known by the skilled person. The set-point of a gelling system may be observed by a marked increase in the viscosity of the aqueous phase.

Many starch-based gelling systems are prepared by swelling the starch-particles in the aqueous phase (i.e. pre-treatment). The temperature at which the swelling can suitably be carried out depends on the type of gelling agent. Some gelling agents such as Purity LFS are prepared by swelling at a temperature above 50 degrees Celsius. Once swollen such gelling systems may increase the viscosity of the liquid. The set-point of such gelling systems is the highest temperature at which the pre-treatment (swelling) may suitably be carried out.

The gelling system may comprise more than one gelling agent. The set-point point of the gelling system is the lowest set-point of the gelling agents comprised by it. For example, when a gelling system comprises a gelling agent with a set-point of 50 degrees Celsius and a gelling agent with a set-point of 37 degrees Celsius, the set-point of the gelling system is 37 degrees Celsius.

To obtain an aqueous phase comprising a gelling system with a viscosity of at most 100 mPas at 5 degrees Celsius the aqueous phase is subjected to mechanical stress, for example high shear. After said viscosity is attained, the temperature of the aqueous phase should not be raised above the set-point of the gelling system prior to the mixing step 'c'.

The process according to the invention uses fat powder. During mixing of the fat powder, oil and the aqueous phase at step 'c', the temperature of the mixture is kept below the temperature at which the structuring fat melts and below the setting point of the gelling system. Preferably said temperature is at most 25 degrees Celsius. Preferably during mixing at step 'c' of the process according to the invention the temperature of the aqueous phase comprising the gelling system is kept from 2 to 25 degrees Celsius, preferably from 3 to 15 degrees and most preferably from 4 to 10 degrees Celsius.

By applying sufficient shear and shear time the viscosity of the aqueous phase comprising any gelling system may be reduced to at most 100 mPas. Depending on the gelling system the amount of shear and/or the amount of shearing time required may vary. For example, it was found that for a gelling system comprising gelling agents based on waxy corn starches modified using cross-linking by acetic acid anhydride and substituted by adipic acid anhydride the required shearing time may be quite long. In contrast, if the gelling system comprises gelling agents based on starches which have been subjected to cross-linking using phosphoric acid it was found that the viscosity of the aqueous phase could suitably be reduced by applying high shear for a few minutes. For practical reasons, such as process time, the gelling system according to the invention preferably comprises starch which has been subjected to cross-linking using phosphoric acid and more preferably comprises tapioca starch which has been subjected to cross-linking using phosphoric acid.

Surprisingly, it was found that a viscosity of at most 100 mPas at 5 degrees Celsius of the aqueous phase comprising the gelling system at step 'c' is essential to provide a low-fat water-in-oil emulsion with good stability. A stable water-in-oil emulsion is characterized by a dispersed aqueous phase with a low average size and small size distribution of the droplets. The average size of the aqueous phase droplets is expressed as D3,3 and measured in micrometer. The size distribution of the aqueous phase droplets is expressed as e^sigma value. It was found that the e^sigma and D3,3 can be further reduced in low-fat water-in-oil emulsions by further reducing the viscosity of the aqueous phase below 100 mPas. Preferably, the viscosity of the aqueous phase comprises a gelling system is at most at most 70 mPas, preferably at most 50 mPas and more preferably at most 35 mPas, as measured at 5 degrees Celsius.

A low-fat water-in-oil emulsion according to the invention has a D3,3 of at most 20, preferably of at most 15, more preferably of at most 10 and most preferably of at most 8 micrometer. A large e^sigma value indicates an increased occurrence of large droplets in the emulsion. A high occurrence of large droplets may lead to watery patches in the spread. The presence of large droplets and watery patches may lead to the occurrence of free water during spreading and a decreased microbiological stability of the emulsion. A water-in-oil emulsion according to the invention has a e^sigma value of at most 2.0 more preferably of at most 1.9 and most preferably of at most 1.6.

The low-fat water-in-oil emulsion according to the invention comprises oil. The complete oil phase may be mixed at any of steps 'a' to 'c'. The oil phase may also be mixed in parts. For example, half the oil phase may be mixed at step 'a' and half the oil phase may be mixed at step 'c'. The presence of at least part of, but preferably essentially the complete, gelling system in the aqueous phase is of importance to provide low-fat water-in-oil emulsions with an improved quality and stability. Mixing of oil at step 'a' may reduce the amount of gelling system in the aqueous phase. For example, when oil is present in the aqueous phase at a time when high shear is applied, migration of gelling agent to the oil phase may occur. In addition, it was found that subjecting the mixture of liquid oil, fat powder and the aqueous phase at step 'c' to high shear may reduce the stability of the resulting emulsion. Without whishing to be bound by theory it is believed that the maximum amount of shear which can be applied at step 'c' depends on the type of fat powder comprising structuring fat used. Therefore, preferably in the process according to the invention the liquid oil is mixed at step 'b' or 'c' and most preferably at step 'b' to form a slurry. A slurry is a mixture of liquid oil comprising fat powder.

The oil in the fat mixture is liquid oil and may be a single oil or a mixture of different oils, and may comprise other components. Preferably at least 50 wt% of the oil (based on total amount of oil) is of vegetable origin, more preferably at least 60 wt%, even more preferably at least 70 wt%, still more preferably at least 80 wt%, even still more preferably at least 90 wt% and even still more further preferably at least 95 wt%. Most preferably the oil essentially consists of oil of vegetable origin.

The gelling agents are typically added in dried form (e.g. powdered form) to the aqueous phase. The weight of the gelling system comprises the sum of the dry weight of all the gelling agents present. The gelling system generally is an expensive ingredient. Preferably the amount of gelling system is at most 4.5 wt. %, more preferably at most 3.5 wt. %, even more preferably at most 3 wt. %, and most preferably at most 2 wt. %. Preferably the water-in-oil emulsion according to the invention comprises at least 0.5 wt. % and more preferably at least 1 wt. % of gelling system.

The gelling system comprises at least one gelling agent. Examples of gelling agents according to the invention are commonly known gelling agents and include for example polysaccharides like starches, vegetable gums and pectin as well as proteins suitable for such use like gelatine. Preferably the gelling agents are selected from the group of physically or chemically modified starch and combinations thereof. Examples of the starches are acetylated distarch adipate such as the cook-up type Collfo 67 ™ and the pre-gelled Instant Clear Gel ™ ex National Starch or the Merigel 341 ex Tate 5 Lyle. Preferably the gelling system according to the invention comprises at most 3 gelling agents, more preferably at most 2 gelling agents and most preferably 1 gelling agent.

It was found that some gelling agents are better suited to stabilize a low-fat water-in-oil emulsion than others when used as the only gelling agent in a gelling system. For example, it was observed that gelatin as only gelling agent may result in aqueous phase droplets which increase in size during storage. It is believed that gelling agents that form colloidal polymer structures, such as many starch based gelling agents, form more stable aqueous phase droplets during storage. Preferably the gelling system according to the invention comprises gelling agents that form colloidal polymer structures and more preferably are cross-linked starches. Preferably the gelling system according to the invention does not comprise gelatin.

Typically, in a factory scale process the aqueous phase comprising the gelling system is prepared in a separate holding tank. In a typical traditional process the aqueous phase comprising the gelling system is kept in a holding tank at elevated temperatures to prevent gelation. In the process according to the invention it is possible for the aqueous phase comprising the gelling system to be kept below the set-point of the gelling system. Maintaining said aqueous phase at room temperature involves no heating or cooling. As such it has the added benefit of reducing energy consumption and the cost of equipment (e.g. no need for heating and/or cooling equipment) in a process to manufacture low-fat water-in-oil emulsions. In the process according to the invention the aqueous phase comprising the gelling system is preferably kept at room temperature.

### Fat powder

The edible composition is made in a process wherein fat powder comprising structuring fat (i.e. hardstock) is used. The amount of fat powder used is suitably chosen such that the required structuring (i.e. stable emulsion) is obtained. It will be appreciated that the amount of fat powder depends on the amount of structuring fat in the fat powder and the desired amount of structuring fat on total product. Preferably the amount of fat powder comprising structuring fat used is from 1 to 20 wt. %, more preferably from 2 to 15 wt. % and even more preferably from 2.5 to 12 wt. % and most preferably from 2.5 to 10 wt. %, based on the total weight of the ingredients.

The presence of structuring fat may help to stabilize the edible composition and reduce the required total amount of SAFA in the fat mixture. The crystallization and melting properties of the structuring fat are important as they influence the stability of the emulsion, e.g. syneresis and plasticity, as well as the organoleptic properties, e.g. oral melting behavior and flavor release. It will be appreciated that the amount of structuring fat necessary for imparting structure to an edible composition depends on the desired structure. For example, for a stable spread a certain amount of structuring fat is necessary. If the amount of structuring fat is too low, a stable emulsion may not be obtained and the resulting emulsion may not comprise the typical plasticity of a spread.

The fat powder comprises structuring fat and preferably comprises at least 80 wt. % of structuring fat, more preferably at least 85 wt. %, even more preferably at least 90 wt. %, still more preferably at least 95 wt. % and most preferably at least 98 wt. %. Most preferably the edible fat powder essentially consists of structuring fat.

The structuring fat may be a single fat or a mixture of different fats. The structuring fat may be of vegetable, animal or marine origin. Preferably at least 50 wt. % of the structuring fat (based on total amount of structuring fat) is of vegetable origin, more preferably at least 60 wt. %, even more preferably at least 70 wt. %, still more preferably at least 80 wt. %, even still more preferably at least 90 wt. % and even still more further preferably at least 95 wt. %. Most preferably the structuring fat essentially consists of structuring fat of vegetable origin.

The fat powder may comprise any suitable oil or fat. Preferred oils and fats are those known for the production of margarine and margarine derivatives such as low fat spreads. The oil and fat are for example selected from the group comprising sunflower oil, rapeseed oil, palm oil, coconut oil, soy bean oil, palm kernel oil, butter fat or a combination thereof. Preferably the liquid oil is selected from the group consisting of sunflower oil, rapeseed oil, soybean oil, linseed oil, maize oil and combinations thereof. Preferably the structuring fat is selected from the group consisting of palm oil, palm kernel oil, coconut oil and combinations thereof.

The structuring fat as present in the edible fat powder preferably has a solid fat content N10 from 50 to 100, N20 from 26 to 95 and N35 from 5 to 60.

Preferably, the structuring fat is obtainable by a method such as Super Critical Melt Micronisation (ScMM), also known as particles from gas saturated solutions (PGSS). This is a commonly known method and is for example described in J. of Supercritical Fluids 43 (2007) 181-190 and EP1651338.

It is important that the fat powder is not subjected to temperatures at which the structuring fat melts as this may severely reduces the effectiveness of the edible composition to structure the resulting water-in-oil emulsion. This temperature depends on the structuring fat as used and can routinely be determined for example based on the solid fat content profile (i.e. N-lines) of the structuring fat. Preferably the fat powder, after production, has not been subjected to temperatures above 25, more preferably 15, even more preferably 10 and most preferably 5 degrees Celsius.

It was surprisingly found that edible low-fat water-in-oil emulsions can be obtained which are low in SAFA, have an acceptable organoleptic profile and an improved stability.

In a second aspect the invention relates to an edible low-fat water-in-oil emulsion comprising
- at most 45 wt. % of a fat phase, and
- at most 25 wt. % saturated fatty acids, based on the total weight of the fat phase, and
- a dispersed aqueous phase comprising a gelling system,
wherein said aqueous phase has a viscosity of at most 100 mPas at 5 degrees Celsius, and wherein the dispersed aqueous phase is characterized by an D3,3 of at most 20 micrometer and an e^sigma of at most 2.0, more preferably of at most 1.9 and most preferably of at most 1.6.

Preferably products according to the invention are made in a process wherein fat powder comprising structuring fat is used and more preferably said fat powder comprising structuring fat is obtainable by a method such as Super Critical Melt Micronisation.

### Oil soluble emulsifiers

Emulsifiers are commonly used in the preparation of fat continuous spreads. The Hydrophilic-lipophilic Balance (HLB) of an emulsifier is a measure of the degree to which it is hydrophilic or lipophilic. An emulsifier having a low HLB value is usually classified as a hydrophobic emulsifier. An emulsifier having a high HLB value is typically classified as a hydrophilic emulsifier. Phospholipids with a HLB of 6 or more, such as hydrolyzed lecithin, are typically added to water-in-oil emulsions to improve the texture and flavor release. However, such phospholipids have a tendency to negatively affect the stability of the emulsion by increasing the average droplet size of the aqueous phase. This tendency of such phospholipids to increase the average droplet size was observed when used in emulsions made with the conventional votator process.

Surprisingly, when a phospholipid with a HLB value of 6 or more is present from 0.005 to 0.10 wt. % in a low-fat water-in-oil emulsion made using fat powder comprising structuring fat it improves flavor release and decreases the average droplet size.

Therefore, preferably the low-fat water-in-oil emulsion according to the invention comprises from 0.005 to 0.10 wt. % of phospholipid with a HLB value of 6 or more.

A known source of phospholipids is lecithin. Naturally occurring phospholipids have a low HLB value. The HLB value of naturally occurring phospholipds may be suitable modified by hydrolysis reactions. It will be appreciated that during hydrolysis, in particular during enzymatic hydrolysis, the final reaction product will not be 100% pure. Suitably the water-in-oil emulsion according to the invention may comprise a phospholipid mixture as long as the overall HLB value of the mixture is 6 or more.

Preferably the phospholipid with a HLB value of 6 or more comprises of more than 50 wt. % of hydrolyzed lecithin and most preferably essentially consists of hydrolyzed lecithin.

It was observed that the effect of the phospholipid with a HLB value of 6 or more to simultaneously enhance flavor release and the reduce the average droplet size is concentration dependent. Preferably the phospholipid with a HLB value of 6 or more is present in an amount of from 0.01 to 0.09 wt. %, preferably from 0.05 to 0.08 wt. % and more preferably is from 0.06 to 0.07 wt. %.

Products according to the invention are low-fat water-in-oil emulsions comprising at most 45 wt. %, preferably at most 35 wt. %, more preferably at most 32 wt. % and most preferably at most 30 wt. % of a fat phase.

Preferably products according to the invention have an aqueous phase comprising at a gelling system and a viscosity of at most 70 mPas, preferably at most 50 mPas, more preferably at most 35 mPas at 5 degrees Celsius.

Preferably products according to the invention have an aqueous phase comprising a gelling system comprising a starch-based gelling agent, which has been subjected to cross-linking using phosphoric acid and more preferably a tapioca starch-based gelling agent which has been subjected to cross-linking using phosphoric acid.

Preferably, the low-fat water-in-oil emulsion according to the invention is in the form of a spread.

In a further aspect the invention relates to the products according to the invention as described herein obtainable by the process according to the invention as described herein.

The invention is now illustrated by the following non limiting examples.

### Examples

### Water droplet size distribution of spreads (D3,3 measurement)

The normal terminology for Nuclear Magnetic Resonance (NMR) is used throughout this method. On the basis of this method the parameters D3,3 and exp(σ) (a.k.a. e^sigma) of a lognormal water droplet size distribution can be determined. The D3,3 is the volume weighted mean droplet diameter and σ is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the lognormal droplet size distribution - the parameters of the water droplet size distribution D3,3 (volume weighed geometric mean diameter) and σ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

The droplet size of the spread is measured, according to the above described procedure, of a spread directly after production.

### Viscosity measurement

The viscosity was determined with a Brookfield viscometer suitable for making viscosity measurements of a 600 ml beaker, using a spindle-type 62. The spindle was inserted in the aqueous phase comprising the gelling agent until the fluid level reached the immersion groove on the shaft of the spindle. Next, the spindle was attached to the lower shaft of the viscometer. The viscosity was measured of the aqueous phase having a temperature of 5 degrees Celsius with the viscometer operating at 100 rpm.

### Spreads production

Spreads with a composition according to Table 1 were made according to the method as described below. Examples 1 to 3 and Comparative A contained 21 wt. % SAFA based on the total fat phase. Comparative B contained 23 wt. % SAFA based on the total fat phase.

**Table 1, Spread composition (parts, w/w)**

| | Example 1 | Example 2 | Example 3 | Comparative A | Comparative B |
|---|---|---|---|---|---|
| FAT PHASE | | | | | |
| Liquid oil | 25.7 | 25.7 | 25.7 | 25.7 | 23.5 |
| Fat powder | 3.9 | 3.9 | 3.9 | 3.9 | 4.3 |
| Dimodan RT/B | 0.3 | 0.3 | 0.3 | 0.3 | - |
| Dimodan HP | - | - | - | - | 0.2 |
| Colorant | Trace | Trace | Trace | Trace | Trace |
| Flavours | Trace | Trace | Trace | Trace | Trace |
| | | | | | |
| AQUEOUS PHASE | | | | | |
| Colflo67 | - | - | - | 2 | - |
| Instant Cleargel E | - | - | 2 | - | - |
| Purity LFS | - | 6 | - | - | - |
| Purity SUV | 3.25 | - | - | - | - |
| Gelatin | - | - | - | - | 1 |
| Merigel | - | - | - | - | 4 |
| Potassium sorbate | 0.07 | 0.07 | 0.07 | 0.07 | 0.18 |
| Salt | 1.3 | 1.3 | 1.3 | 1.3 | 0.75 |
| Buttermilk powder | - | - | - | - | 0.55 |
| Lactic acid | - | - | - | - | 0.18 |
| Tap water | Balance | Balance | Balance | Balance | Balance |

Dimodan ® R-T/B: molecularly distilled mono/diacylglyceride mixture derived from hardened Rapeseed oil (90% monoglyceride) ex Danisco, DK.
Dimodan® HP: molecularly distilled mono/diacylglyceride mixture derived from fully hardened palm oil (90% monoglyceride) ex Danisco.

Fat powder is a fat powder comprising structuring fat that was obtained using a supercritical melt micronisation process similar to the process described in 'Particle formation of ductile materials using the PGSS technology with supercritical carbon dioxide', P.Münüklü, Ph.D.Thesis, Delft University of Technology, 16-12-2005, Chapter 4, pp. 41-51; using an interesterified mixture of 65% dry fractionated palm oil stearin with an Iodine Value of 14 and 35% palm kernel oil.
Purity SUV: tapioca starch, modified using cross-linking by phosphoric acid.
Purity LFS: as Purity SUV but with a smaller degree of cross-linking.
Collfo 67: waxy corn starch, modified using cross-linking by acetic anhydride and substituted by adipic acid anhydride.
Instant Cleargel E: waxy corn starch, modified using cross-linking by acetic acid anhydride and substituted by adipic acid anhydride.
Merigel: as Instant Cleargel E with a different degree of cross-linking.

All aqueous phase ingredients including gelling agent were dissolved in water at a temperature of about 85 to 89 degrees Celsius. The aqueous phase was cooled to below the set-point of the gelling system and subjected to shear in a mixer. The mixer with a vessel volume of 130 liter was fitted with stirrer-knives and operated at a speed of 1500 rpm. The mixing time is shown in table 2. Said mixing resulted in high shear and a viscosity as shown in table 2. Clearly, the viscosity of the aqueous phase comprising phosphoric acid cross linked starches (Example 1, Purity SUV) is readily reduced. The aqueous phase comprising starches modified using cross-linking by acetic acid anhydride and substituted by adipic acid anhydride (Example 3, Comparative A, Comparative B) were less reduced in viscosity. The aqueous phase of comparative A could not sufficiently be reduced even under high shear in the timespan of 20 minutes.

**Table 2 time at high shear of aqueous phase and resulting viscosity of the aqueous phase (mPas)**

| | Example 1 | Example 2 | Example 3 | Comparative A | Comparative B |
|---|---|---|---|---|---|
| Shear time (min) | 10 | 7 | 10 | 20 | 5 |
| Viscosity at 5 °C (mPas) | 24.6 | Nd | 45.6 | 117.4 | Max |

| | | | | | |
|---|---|---|---|---|---|
| Nd: not determined. Max: viscosity at 5 degrees Celsius was above the upper limit of the measuring range of the viscometer. The viscosity of the aqueous phase of comparative B was 171 mPas at 50 degrees Celsius. | | | | | |

During spreads production the aqueous phase comprising the gelling system was pumped first through a tubular heat exchanger and cooled to 6-8 degrees Celsius just before mixing with the fat mixture.

The fat mixture was made by dispersing the fat powder in the liquid oil having a temperature of about 5 degrees Celsius, while degassing under vacuum. Sometimes lumps were formed. After pouring the fat mixture into a pre-cooled can of 5 degrees Celsius, it was made homogeneous and smooth by applying an Ultra-turrax for a few minutes at the lowest level of shear. The fat feed tank was thermo-stated at about 19 degrees Celsius.

The fat feed tank and the aqueous feed tank feed via a junction point into a 50 ml double walled stainless steel pin stirrer, with two rows of 4 stator and rotor pins.

Initially the fat mixture phase was pumped into this system including the pin stirrer to fill it completely. Then both phases were pumped into the system at the required ratio using 2 gear pumps. After the junction point the mixture was pumped at about 12 kg/h, using a third gear pump, into the pin stirrer, which resulted in a residence time of 15 seconds in the stirrer. The pin stirrer was thermo-stated at 8°C and operated at 2000 rpm. The final product was filled into 150 ml plastic tubs and stored at 5 degrees Celsius.

The spreads of Example 1, Example 2, Comparative A and Comparative B were characterized (Table 3).

**Table 3 characterization of spreads.**

| | Example 1 | Example 2 | Example 3 | Comparative A | Comparative B |
|---|---|---|---|---|---|
| D3,3 | 5.79 | 4.91 | 6.86 | 8.05 | 13 |
| e^sigma | 1.56 | 1.55 | 1.96 | 2.07 | 2.3 |

In table 3 are shown the average size of the water droplets (D3,3) and the size distribution of the water droplets (e^sigma) of the manufactured spreads. Comparative A and Comparative B, with a viscosity of the aqueous phase comprising a gelling agent above 100 mPas at 5 degrees Celsius did not result in a low-fat water-in-oil emulsion with an e^sigma of the aqueous phase droplets of 2.0 or lower. Examples 1 to 3 resulted in spreads wherein the dispersed aqueous phase had a D3,3 of below 7 and an e^sigma below 2.0. Examples 1 to 3 resulted in spreads of good stability.

## Claims

1. Process for the manufacture of an edible low-fat water-in-oil emulsion comprising an aqueous phase and at most 45 wt. % of a fat phase, wherein said fat phase comprises liquid oil and structuring fat, comprising the steps of
a. providing an aqueous phase comprising a gelling system;
b. providing fat powder comprising structuring fat;
c. forming the edible low-fat water-in-oil emulsion by mixing said aqueous phase, said fat powder and liquid oil;
• wherein the viscosity of the aqueous phase comprising the gelling system is reduced by subjecting the aqueous phase to high shear at a temperature below the set-point of the gelling system, such that the aqueous phase comprising a gelling system at step c has a viscosity of at most 100 mPas at 5 degrees Celsius,
• and wherein the liquid oil may be mixed at any of steps a, b or c, or when mixed in parts in any combination at steps a, b and c.

2. Process according to claim 1, wherein said low-fat water-in-oil emulsion comprises at most 35 wt. %, more preferably at most 32 wt. % and most preferably at most 30 wt.% of a fat phase.

3. Process according to any one of claim 1 or claim 2, wherein said gelling system comprises at most 3 gelling agents, preferably at most 2 gelling agents and most preferably 1 gelling agent.

4. Process according to any one of claims 1 to 3, wherein the amount of fat powder comprising structuring fat used is from 1 to 20 wt. %, more preferably from 2 to 15 wt. %, even more preferably from 2.5 to 12 wt. % and most preferably from 2.5 to 10 wt. %.

5. Process according to any one of claims 1 to 4, wherein the liquid oil is mixed at step b or c, preferably wherein the liquid oil is mixed at step b to form a slurry.

6. Process according to any one of claims 1 to 5, wherein said viscosity is at most 70 mPas, preferably at most 50 mPas, more preferably at most 35 mPas at 5 degrees Celsius.

7. Process according to any one of claims 1 to 6, wherein said gelling system comprises starch which has been subjected to cross-linking using phosphoric acid and more preferably comprises tapioca starch which has been subjected to cross-linking using phosphoric acid.

8. Process according to any one of claims 1 to 7, wherein said process comprises the use of fat powder comprising structuring fat obtainable by super critical melt micronisation.

9. Process according to any one of claims 1 to 8, wherein the amount of gelling system is at most 4.5 wt. %, more preferably at most 3.5 wt. %, even more preferably at most 3 wt. %, and most preferably at most 2 wt. %.

10. Process according to any one of claims 1 to 9, wherein the temperature of the aqueous phase in step c is from 2 to 25, preferably from 3 to 15 and most preferably from 4 to 10 degrees Celsius.

11. Edible low-fat water-in-oil emulsion comprising
• at most 45 wt. % of a fat phase, and
• at most 25 wt. % saturated fatty acids, based on the total weight of the fat phase, and
• a dispersed aqueous phase comprising a gelling system,
wherein said aqueous phase has a viscosity of at most 100 mPas at 5 degrees Celsius, and wherein the dispersed aqueous phase is **characterized by** an D3,3 of at most 20 micrometer and an e^sigma of at most 2.0, more preferably of at most 1.9 and most preferably of at most 1.6.

12. Edible low-fat water-in-oil emulsion according to claim 11, further comprising from 0.005 to 0.10 wt. % of phospholipid with a HLB value of 6 or more preferably from 0.01 to 0.09 wt. %, more preferably from 0.05 to 0.08 wt. % and most preferably from 0.06 to 0.07 wt. %.

13. Edible low-fat water-in-oil emulsion according to claim 11 or claim 12, wherein said gelling system comprises starch which has been subjected to cross-linking using phosphoric acid and more preferably comprises tapioca starch which has been subjected to cross-linking using phosphoric acid.

14. Edible low-fat water-in-oil emulsion according to any one of claims 11 to 13, wherein the viscosity of said aqueous phase is at most 70 mPas, preferably at most 50 and most preferably at most 35 mPas at 5 degrees Celsius.

15. Edible low-fat water in-oil emulsion according to any one of claims 11 to 14, wherein said low-fat water-in-oil emulsion comprises at most 35 wt. %, more preferably at most 32 wt. % and most preferably at most 30 wt. % of a fat phase.

## Patentansprüche

1. Verfahren zur Herstellung einer essbaren Wasser-in-ÖI-Emulsion mit geringem Fettanteil, umfassend eine wässrige Phase und höchstens 45 Gew.-% einer Fettphase, wobei die Fettphase flüssiges Öl und Strukturierungsfett umfasst, umfassend die Schritte
a. Bereitstellen einer wässrigen Phase, umfassend ein Geliersystem,
b. Bereitstellen eines Fettpulvers, umfassend Strukturierungsfett,
c. Ausbilden der Wasser-in-ÖI-Emulsion mit geringem Fettanteil durch Mischen der wässrigen Phase, des Fettpulvers und des flüssigen Öls,
• wobei die Viskosität der wässrigen Phase, die das Geliersystem enthält, reduziert wird, indem die wässrige Phase bei einer Temperatur unterhalb des Erstarrungspunktes des Geliersystems hoher Scherung unterworfen wird, so dass die Fettphase, umfassend ein Geliersystem, im Schritt c eine Viskosität von höchstens 100 mPas bei 5 Grad Celsius aufweist,
• und wobei das flüssige Öl in irgendeinem der Schritte a, b oder c oder, wenn in Teilen gemischt, in irgendeiner Kombination in den Schritten a, b und c gemischt werden kann.

2. Verfahren nach Anspruch 1, wobei die Wasser-in-ÖI-Emulsion mit geringem Fettanteil höchstens 35 Gew.-%, bevorzugter höchstens 32 Gew.-% und äußerst bevorzugt höchstens 30 Gew.-% einer Fettphase umfasst.

3. Verfahren nach irgendeinem der Ansprüche 1 oder Anspruch 2, wobei das Geliersystem höchstens 3 Gelierungsmittel, vorzugsweise höchstens 2 Gelierungsmittel und äußerst bevorzugt 1 Gelierungsmittel umfasst.

4. Verfahren nach irgendeinem der Ansprüche 1 bis 3, wobei die Menge des Fettpulvers, das das verwendete Strukturierungsfett umfasst, von 1 bis 20 Gew.-%, bevorzugter von 2 bis 15 Gew.-%, sogar bevorzugter von 2,5 bis 12 Gew.-% und äußerst bevorzugt von 2,5 bis 10 Gew.-% beträgt.

5. Verfahren nach irgendeinem der Ansprüche 1 bis 4, wobei das flüssige Öl im Schritt b oder c gemischt wird, wobei das flüssige Öl vorzugsweise im Schritt b gemischt wird, um eine Aufschlämmung zu bilden.

6. Verfahren nach irgendeinem der Ansprüche 1 bis 5, wobei die Viskosität höchstens 70 mPas, vorzugsweise höchstens 50 mPas, bevorzugter höchstens 35 mPas bei 5 Grad Celsius beträgt.

7. Verfahren nach irgendeinem der Ansprüche 1 bis 6, wobei das Geliersystem Stärke umfasst, die unter Verwendung von Phosphorsäure einem Vernetzen unterworfen worden ist, und bevorzugter Tapiokastärke umfasst, die unter Verwendung von Phosphorsäure einem Vernetzen unterworfen worden ist.

8. Verfahren nach irgendeinem der Ansprüche 1 bis 7, wobei das Verfahren die Verwendung eines Fettpulvers umfasst, das ein Strukturierungsfett umfasst, erhältlich durch überkritische Schmelzmikronisierung.

9. Verfahren nach irgendeinem der Ansprüche 1 bis 8, wobei die Menge des Geliersystems höchstens 4,5 Gew.-%, bevorzugter höchstens 3,5 Gew.-%, sogar bevorzugter höchstens 3 Gew.-% und äußerst bevorzugt höchstens 2 Gew.-% beträgt.

10. Verfahren nach irgendeinem der Ansprüche 1 bis 9, wobei die Temperatur der wässrigen Phase im Schritt c von 2 bis 25, vorzugsweise von 3 bis 15 und äußerst bevorzugt von 4 bis 10 Grad Celsius beträgt.

11. Essbare Wasser-in-ÖI-Emulsion mit geringem Fettanteil, umfassend
• höchstens 45 Gew.-% einer Fettphase und
• höchstens 25 Gew.-% gesättigte Fettsäuren, bezogen auf das Gesamtgewicht der Fettphase, und
• eine dispergierte wässrige Phase, umfassend ein Geliersystem,
wobei die wässrige Phase eine Viskosität von höchstens 100 mPas bei 5 Grad Celsius aufweist und wobei die dispergierte wässrige Phase durch einen D3,3 von höchstens 20 Mikrometer und einem e^sigma von höchstens 2,0, bevorzugter von höchstens 1,9 und äußerst bevorzugt von höchstens 1,6 charakterisiert ist.

12. Essbare Wasser-in-ÖI-Emulsion mit geringem Fettanteil nach Anspruch 11, des Weiteren umfassend 0,005 bis 0,10 Gew.-% Phospholipid mit einem HLB-Wert von 6 oder bevorzugter von 0,01 bis 0,09 Gew.-%, bevorzugter von 0,05 bis 0,08 Gew.-% und äußerst bevorzugt von 0,06 bis 0,07 Gew.-% aufweist.

13. Essbare Wasser-in-ÖI-Emulsion mit geringem Fettanteil nach Anspruch 11 oder Anspruch 12, wobei das Geliersystem Stärke umfasst, die unter Verwendung von Phosphorsäure einem Vernetzen unterworfen worden ist, und bevorzugter Tapiokastärke umfasst, die unter Verwendung von Phosphorsäure einem Vernetzen unterworfen worden ist.

14. Essbare Wasser-in-ÖI-Emulsion mit geringem Fettanteil nach irgendeinem der Ansprüche 11 bis 13, wobei die Viskosität der wässrigen Phase höchstens 70 mPas, vorzugsweise höchstens 50 und äußerst bevorzugt höchstens 35 mPas bei 5 Grad Celsius beträgt.

15. Essbare Wasser-in-ÖI-Emulsion mit geringem Fettanteil nach irgendeinem der Ansprüche 11 bis 14, wobei die Wasser-in-ÖI-Emulsion mit geringem Fettanteil höchstens 35 Gew.-%, bevorzugter höchstens 32 Gew.-% und äußerst bevorzugt höchstens 30 Gew.-% einer Fettphase umfasst.

## Revendications

1. Procédé pour la fabrication d'une émulsion eau-dans-huile à faible teneur en graisse comestible comprenant une phase aqueuse et au plus 45 % en masse d'une phase de graisse, dans lequel ladite phase de graisse comprend une huile liquide et une graisse structurante, comprenant les étapes de
a. fourniture d'une phase aqueuse comprenant un système de gélification ;
b. fourniture de poudre de graisse comprenant une graisse structurante ;
c. formation de l'émulsion eau-dans-huile à faible teneur en graisse comestible par mélange de ladite phase aqueuse, desdites poudre de graisse et huile liquide ;
• dans lequel la viscosité de la phase aqueuse comprenant le système de gélification est réduite en soumettant la phase aqueuse à un cisaillement élevé à une température inférieure au point de prise du système de gélification, de sorte que la phase aqueuse comprenant un système de gélification dans l'étape c présente une viscosité d'au plus 100 mPas à 5 degrés Celsius,
• et dans lequel l'huile liquide peut être mélangée dans l'une quelconque des étapes a, b ou c, ou lorsqu'elle est mélangée en parties dans une combinaison quelconque aux étapes a, b et c.

2. Procédé selon la revendication 1, dans lequel ladite émulsion eau-dans-huile à faible teneur en graisse comprend au plus 35 % en masse, encore mieux au plus 32 % en masse et bien mieux encore au plus 30 % en masse d'une phase de graisse.

3. Procédé selon l'une quelconque de la revendication 1 ou la revendication 2, dans lequel ledit système de gélification comprend au plus 3 agents de gélification, de préférence au plus 2 agents de gélification et au plus de préférence 1 agent de gélification.

4. Procédé selon l'une quelconque des revendications 1 à 3, dans lequel la quantité de poudre de graisse comprenant une graisse structurante utilisée est de 1 à 20 % en masse, encore mieux de 2 à 15 % en masse, bien mieux encore de 2,5 à 12 % en masse et plus particulièrement de préférence de 2,5 à 10 % en masse.

5. Procédé selon l'une quelconque des revendications 1 à 4, dans lequel l'huile liquide est mélangée dans l'étape b ou c, de préférence dans lequel l'huile liquide est mélangée dans l'étape b pour former une suspension.

6. Procédé selon l'une quelconque des revendications 1 à 5, dans lequel ladite viscosité est d'au plus 70 mPas, de préférence d'au plus 50 mPas, encore mieux d'au plus 35 mPas à 5 degrés Celsius.

7. Procédé selon l'une quelconque des revendications 1 à 6, dans lequel ledit système de gélification comprend de l'amidon qui a été soumis à une réticulation en utilisant de l'acide phosphorique et comprend encore mieux de l'amidon de tapioca qui a été soumis à une réticulation en utilisant de l'acide phosphorique.

8. Procédé selon l'une quelconque des revendications 1 à 7, dans lequel ledit procédé comprend l'utilisation de poudre de graisse comprenant de la graisse structurante pouvant être obtenue par micronisation à l'état de fusion supercritique.

9. Procédé selon l'une quelconque des revendications 1 à 8, dans lequel la quantité de système de gélification est d'au plus 4,5 % en masse, encore mieux d'au plus 3,5 % en masse, bien mieux encore d'au plus 3 % en masse, et particulièrement de préférence d'au plus 2 % en masse.

10. Procédé selon l'une quelconque des revendications 1 à 9, dans lequel la température de la phase aqueuse dans l'étape c est de 2 à 25, de préférence de 3 à 15 et encore mieux de 4 à 10 degrés Celsius.

11. Emulsion eau-dans-huile à faible teneur en graisse comestible comprenant
• au plus 45 % en masse d'une phase de graisse, et
• au plus 25 % en masse d'acides gras saturés, rapporté à la masse totale de la phase de graisse, et
• une phase aqueuse dispersée comprenant un système de gélification,
dans laquelle ladite phase aqueuse présente une viscosité d'au plus 100 mPas à 5 degrés Celsius, et dans laquelle la phase aqueuse dispersée est **caractérisée par** un D3,3 d'au plus 20 micromètres et un e^sigma d'au plus 2,0, encore mieux d'au plus 1,9 et bien mieux encore d'au plus 1,6.

12. Emulsion eau-dans-huile à faible teneur en graisse comestible selon la revendication 11, comprenant de plus de 0,005 à 0,10 % en masse de phospholipide avec une valeur HLB de 6 ou encore mieux de 0,01 à 0,09 % en masse, encore mieux de 0,05 à 0,08 % en masse et bien mieux encore de 0,06 à 0,07 % en masse.

13. Emulsion eau-dans-huile à faible teneur en graisse comestible selon la revendication 11 ou la revendication 12, dans laquelle ledit système de gélification comprend de l'amidon qui a été soumis à une réticulation en utilisant de l'acide phosphorique et comprend bien mieux encore de l'amidon de tapioca qui a été soumis à une réticulation en utilisant de l'acide phosphorique.

14. Emulsion eau-dans-huile à faible teneur en graisse comestible selon l'une quelconque des revendications 11 à 13, dans laquelle la viscosité de ladite phase aqueuse est d'au plus 70 mPas, de préférence d'au plus 50 et bien mieux encore d'au plus 35 mPas à 5 degrés Celsius.

15. Emulsion eau-dans-huile à faible teneur en graisse comestible selon l'une quelconque des revendications 11 à 14, dans laquelle ladite émulsion eau-dans-huile à faible teneur en graisse comprend au plus 35 % en masse, encore mieux au plus 32 % en masse et bien mieux encore au plus 30 % en masse d'une phase de graisse.
